# EUROPEAN PATENT APPLICATION

(11) **EP 4 647 773 A1**
(43) Date of publication of application: **12.11.2025**
(21) Application number: 24738657.6
(22) Date of filing: 02.01.2024
(51) Int. Cl.: G01N 35/00, G01N 21/84

(54) **STRIP GUIDE COVER AND IN VITRO DIAGNOSTICS DEVICE COMPRISING SAME**

(30) Priority: 03.01.2023 KR 20230000860; 28.04.2023 KR 20230056123
(71) Applicant: SD Biosensor, Inc., Gyeonggi-do 16690 (KR)
(72) Inventor: CHO, Young Shik, Suwon-si, Gyeonggi-do 16690 (KR); PARK, Hyo Lim, Suwon-si, Gyeonggi-do 16690 (KR); KO, Hyun Geun, Suwon-si, Gyeonggi-do 16690 (KR); KIM, Dong Hun, Suwon-si, Gyeonggi-do 16690 (KR); WOO, Hyun Soo, Suwon-si, Gyeonggi-do 16690 (KR); KIM, Iek Lok, Suwon-si, Gyeonggi-do 16690 (KR)
(74) Representative: Eisenführ Speiser
(86) International application number: PCT/KR2024/000016
(87) International publication number: WO 2024/147586

(57) **Abstract**

The present invention relates to a strip guide cover and an in vitro diagnostics device comprising same, the cover fixing, in a housing, a strip mounted in the in vitro diagnostics device. The strip guide cover, which is disposed in the in vitro diagnostics device in order to fix the strip mounted in the in vitro diagnostics device, comprises: a main body part which covers the upper side of the strip, and which is disposed to be spaced from the strip; a guide part protruding from the main body part so as to form, with the main body part, an arrangement space in which the strip is disposed, and guiding the strip, which enters the arrangement space; and a pressing part which is disposed in the guide part, and which presses the strip disposed in the arrangement space.

## Description

### [Technical Field]

The present invention relates to a strip guide cover and an in vitro diagnostics device including the same.

### [Background Art]

In vitro diagnostics (IVD) devices are medical devices used to test clinical specimens (tissue cells, blood, urine, stool, saliva, etc.) taken from individuals for the purpose of diagnosis and prognosis of diseases, determination of health conditions, determination of the effectiveness of treating diseases, and prevention of diseases. An IVD device may include a diagnostic unit which tests a clinical specimen and a housing covering outer sides of the diagnostic unit.

In such an IVD device, a device called a strip is mounted and tests a clinical specimen, and the strip may include a collection part which collects clinical specimens and a channel part which is connected to the collection part and in which a plate, in which a channel is formed, is formed in a multi-layered structure. When the strip is mounted in the IVD device, the collection part is disposed outside the housing of the IVD device, and the channel part is disposed in the housing of the IVD device.

However, since there are no components which fix the channel part of the strip disposed in the housing in the conventional IVD, when the IVD device is shaken, there are problems that the strip is also shaken, which degrades the accuracy of the test and degrades the reliability of the IVD device.

Accordingly, a need to prevent a strip mounted in an IVD device from being shaken is increasing.

### [Detailed Description of Invention]

### [Technical Problem]

The present invention is directed to providing a strip guide cover, which fixes a strip mounted in an in vitro diagnostics device in a housing, and an in vitro diagnostics device including the same.

### [Technical Solution]

A strip guide cover, which is disposed in an in vitro diagnostics device according to one embodiment of the present invention and fixes a strip mounted in the in vitro diagnostics device, includes a main body covering an upper side of the strip and disposed to be spaced apart from the strip, a guide which protrudes from the main body, forms an arrangement space, in which the strip is disposed, with the main body, and guides the strip which enters the arrangement space, and a pressing portion which is disposed inside the guide and presses the strip disposed in the arrangement space.

The pressing portion may include a protrusion which comes into contact with the strip, and the protrusion may be provided as a plurality of protrusions disposed to be spaced apart from each other in a direction in which the strip enters the arrangement space.

The pressing portion may include a tension portion supporting the protrusion, and an arrangement hole in which the tension portion is disposed may be formed in the main body.

The tension portion may include first tension portions disposed to be inclined downward from two end portions of the arrangement hole toward the protrusion and a second tension portion which connects the first tension portions disposed on the two end portions of the arrangement hole and on which the protrusion is disposed.

The guide may include a first surface and a second surface which face a side portion of the strip which enters the arrangement space, and a first distance from the first surface to the second surface may be greater than or equal to a second distance from one side portion of the strip to the other side portion of the strip.

A third distance from a surface of the second tension portion on which the protrusion is disposed to an end portion of the protrusion may be greater than a fourth distance from the surface of the second tension portion on which the protrusion is disposed to a surface of the strip which is disposed in the arrangement space and faces the second tension portion.

The strip guide cover may include a tension maintaining portion disposed in the arrangement hole in a direction in which the second tension portion is disposed, disposed on a surface of the second tension portion on which the protrusion is not disposed, and supporting the second tension portion.

The strip guide cover may include a stopper which protrudes from one region of the main body and stops movement of the strip which enters the arrangement space.

In addition, an in vitro diagnostics device according to one embodiment of the present invention includes a housing in which an entrance, through which a strip for in vitro diagnostics is accommodated, and an inner space connected to the entrance are provided and a strip guide cover which guides the strip which enters the inner space of the housing through the entrance, wherein the strip guide cover includes a main body covering an upper side of the strip and disposed to be spaced apart from the strip, a guide which protrudes from the main body, forms an arrangement space, in which the strip is disposed, with the main body, and guides the strip which enters the arrangement space, and a pressing portion which is disposed inside the guide and presses the strip disposed in the arrangement space.

The pressing portion may include a protrusion which comes into contact with the strip, and the protrusion may be provided as a plurality of protrusions disposed to be spaced apart from each other in a direction in which the strip enters the arrangement space.

The pressing portion may include a tension portion supporting the protrusion, and an arrangement hole in which the tension portion is disposed may be formed in the main body.

The tension portion may include first tension portions disposed to be inclined downward from two end portions of the arrangement hole toward the protrusion and a second tension portion which connects the first tension portions disposed on the two end portions of the arrangement hole and on which the protrusion is disposed.

The guide may include a first surface and a second surface which face a side portion of the strip which enters the arrangement space, and a first distance from the first surface to the second surface may be greater than or equal to a second distance from one side portion of the strip to the other side portion of the strip.

A third distance from a surface of the second tension portion on which the protrusion is disposed to an end portion of the protrusion may be greater than a fourth distance from the surface of the second tension portion on which the protrusion is disposed to a surface of the strip which is disposed in the arrangement space and faces the second tension portion.

The in vitro diagnostics device may include a fixing block which is disposed in the housing and to which the strip guide cover is fixed and an optical module which is movably disposed in the housing and emits light toward the strip.

### [Advantageous Effects]

According to one embodiment of the present invention, since a channel part of a strip which enters an inner space of a housing through a protrusion of a strip guide cover is in close contact with a first substrate, shaking of the channel part of the strip is reduced, and thus the accuracy of a test and the reliability of an in vitro diagnostics device can be improved.

### [Description of Drawings]

FIG. 1 is a perspective view illustrating an in vitro diagnostics device according to one embodiment of the present invention.
FIG. 2 is a view illustrating the in vitro diagnostics device from which a housing and an opening and closing unit are removed.
FIG. 3 is a view illustrating an inner portion of a main opening and closing part of the opening and closing unit.
FIG. 4 is a view illustrating a sub-opening and closing part which closes an entrance of the housing in a state in which a strip is not accommodated in the housing.
FIG. 5 is a view illustrating the sub-opening and closing part which closes the entrance of the housing in a state in which the strip is accommodated in the housing.
FIG. 6 is a perspective view illustrating a fixing block and a first substrate.
FIG. 7 is a perspective view illustrating a strip guide cover.
FIG. 8 is a bottom perspective view illustrating the strip guide cover.
FIG. 9 is a cross-sectional view illustrating a portion of the strip guide cover.
FIG. 10A is a perspective cross-sectional view illustrating the strip mounted in the in vitro diagnostics device.
FIG. 10B is a view illustrating a channel part of the strip which is in close contact with the first substrate due to a protrusion of the strip guide cover.
FIG. 11 is a view illustrating the fixing block, the strip guide cover, and an optical module.
FIG. 12 is a view illustrating a second gear part coupled to the fixing block.
FIG. 13 is a view illustrating a state in which a moving block of a moving unit is moved.
FIG. 14 is a view illustrating a path through which light arrives at a light-receiving part from a light source.

### [Modes of the Invention]

While the present invention may be modified in various ways and have various alternative forms, specific embodiments thereof will be described in detail below. However, there is no intent to limit the present invention to the specific embodiments, and it should be understood that the present invention covers all modifications, equivalents, and alternatives falling within the range of the spirit and scope of the present invention.

Although the terms "first," "second," and the like may be used herein to describe various elements, these elements should not be limited by these terms. These terms are only used to distinguish one element from another element. For example, a second element could be termed a first element, and a first element could similarly be termed a second element without departing from the scope of the present invention. The term "and/or" includes any one or any combination of a plurality of associated listed items.

When a first element is referred to as being "connected" or "coupled" to a second element, it will be understood that the first element may be directly connected or coupled to the second element, or a third element may be present therebetween. In contrast, when an element is referred to as being "directly connected" or "directly coupled" to another element, it will be understood that there are no intervening elements.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to the other element.

The terminology used herein is for the purpose of describing particular embodiments only and is not intended to limit the present invention. The singular forms are intended to include the plural forms, unless the context clearly indicates otherwise. In the present specification, it should be further understood that the terms "comprise," "comprising," "include," and/or "including," when used herein, specify the presence of stated features, numbers, steps, operations, elements, components, and/or combinations thereof but do not preclude the presence or addition of one or more other features, numbers, steps, operations, elements, components, and/or combinations thereof.

Unless otherwise defined, all terms including technical and scientific terms used herein have meanings which are the same as meanings generally understood by those skilled in the art. Terms, such as those defined in commonly used dictionaries, should be interpreted as having meanings that are consistent with their meanings in the context of the relevant art and will not be interpreted in an idealized or overly formal sense unless expressly so defined here.

Hereinafter, when a strip guide cover and an in vitro diagnostics device including the same are described in detail with reference to the accompanying drawings, components that are the same or correspond to each other will be denoted by the same or corresponding reference numerals in all drawings, and redundant descriptions will be omitted.

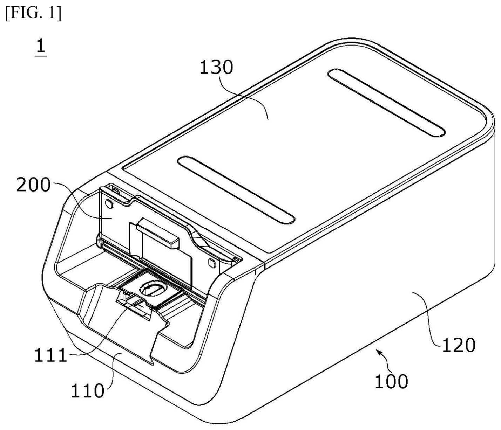

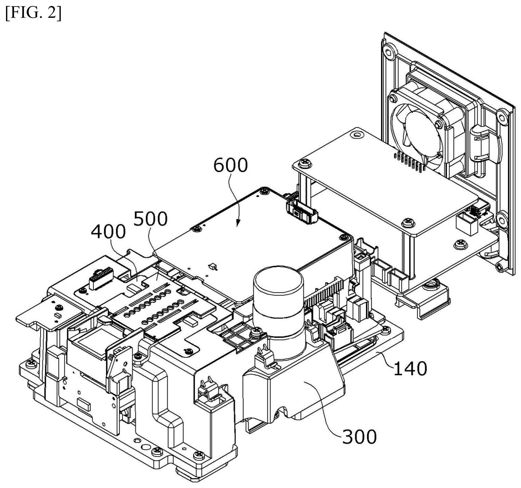

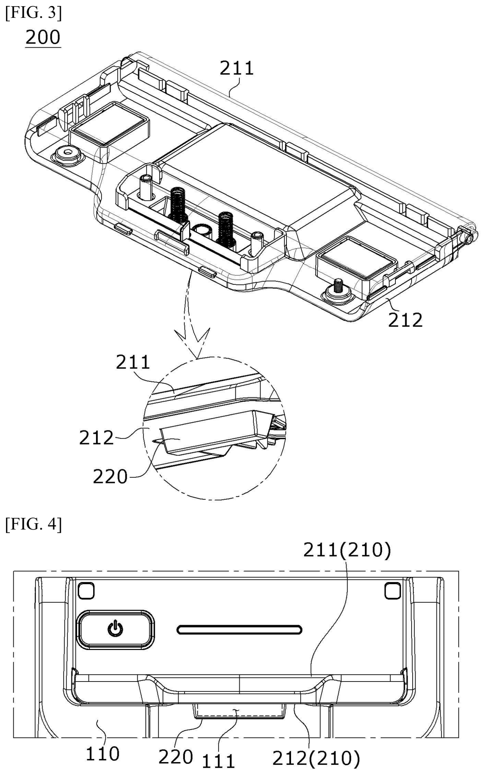

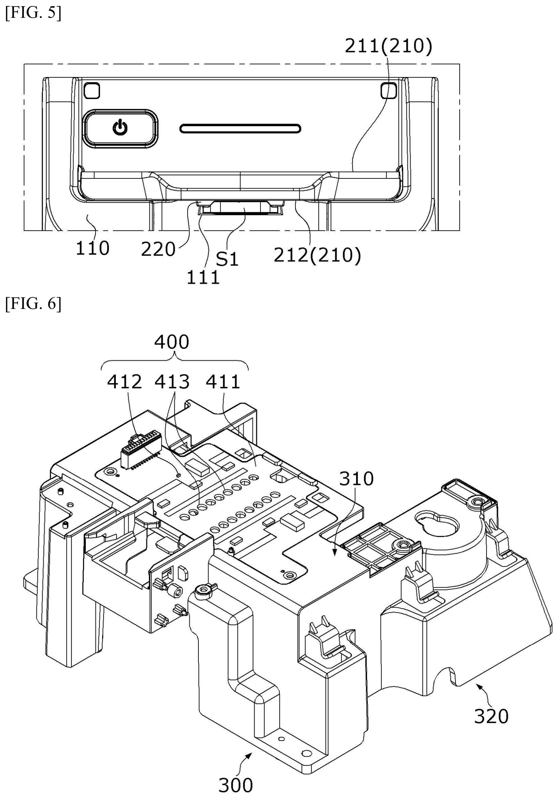

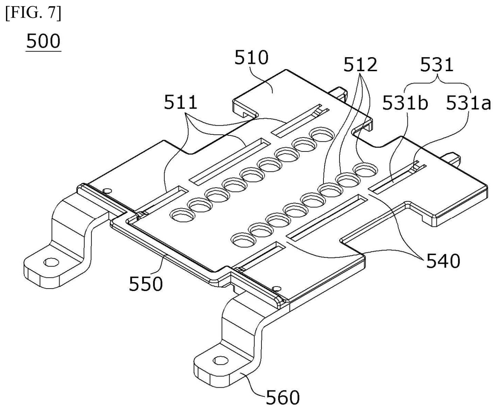

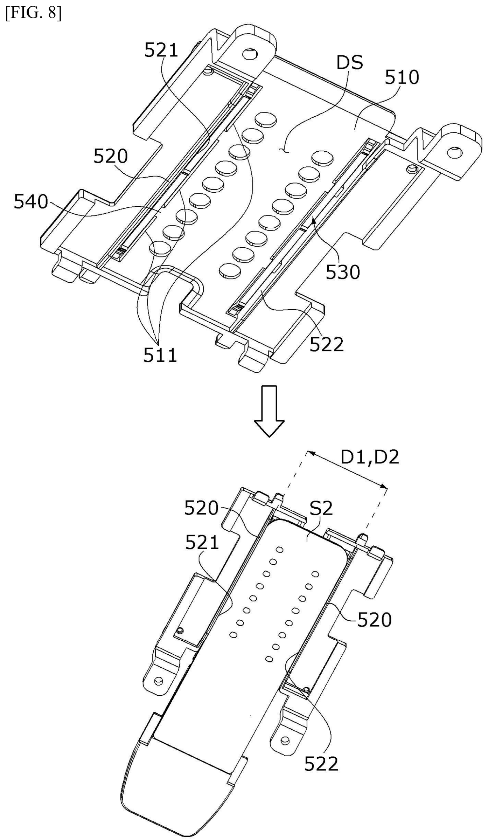

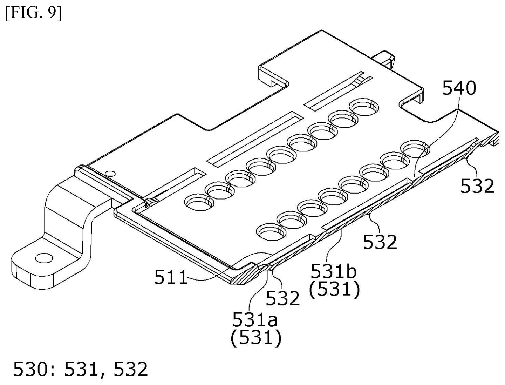

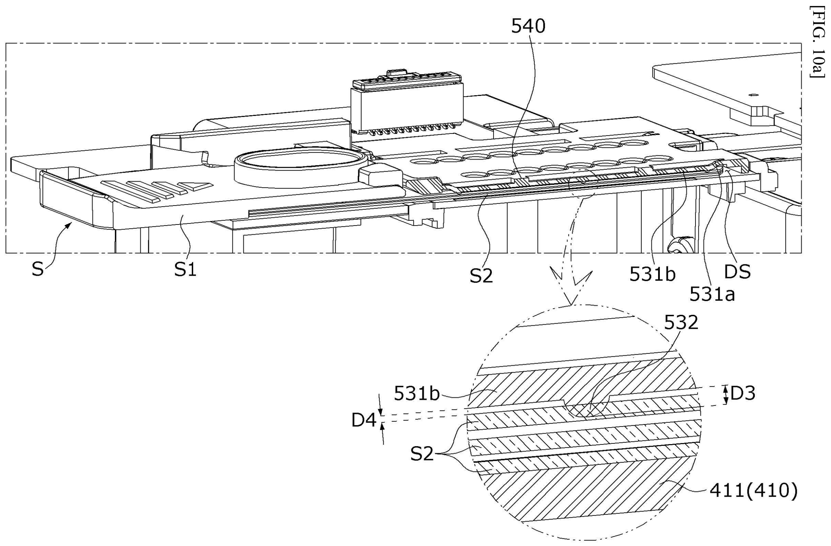

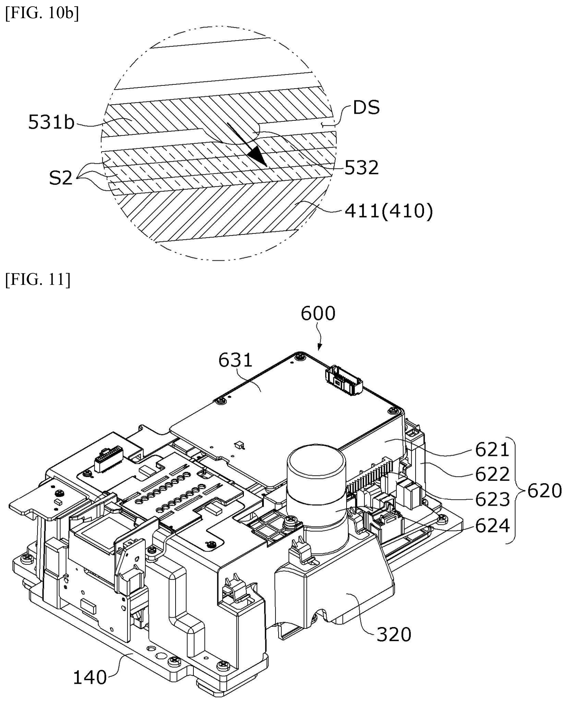

FIG. 1 is a perspective view illustrating an in vitro diagnostics device according to one embodiment of the present invention, and FIG. 2 is a view illustrating the in vitro diagnostics device from which a housing and an opening and closing unit are removed. FIG. 3 is a view illustrating an inner portion of a main opening and closing part of the opening and closing unit, and FIG. 4 is a view illustrating a sub-opening and closing part which closes an entrance of the housing in a state in which a strip is not accommodated in the housing. FIG. 5 is a view illustrating the sub-opening and closing part which closes the entrance of the housing in a state in which the strip is accommodated in the housing, and FIG. 6 is a perspective view illustrating a fixing block and a first substrate. FIG. 7 is a perspective view illustrating a strip guide cover, and FIG. 8 is a bottom perspective view illustrating the strip guide cover. FIG. 9 is a cross-sectional view illustrating a portion of the strip guide cover, FIG. 10A is a perspective cross-sectional view illustrating the strip mounted in the in vitro diagnostics device, and FIG. 10B is a view illustrating a channel part of the strip which is in close contact with the first substrate due to a protrusion of the strip guide cover.

Referring to FIGS. 1 to 5, an in vitro diagnostics device 1 according to one embodiment of the present invention may include a housing 100, an opening and closing unit 200, a fixing block 300, a first substrate 400, a strip guide cover 500, and an optical module 600.

The housing 100 may accommodate a strip S for in vitro diagnostics. An entrance 111 through which the strip S is accommodated may be provided in the housing 100, and an inner space connected to the entrance 111 may be provided in the housing 100.

The housing 100 may include a front portion 110 in which the entrance 111 is provided, a first main portion 120 coupled to the front portion 110 and forming an inner space in which a portion of the strip S is accommodated, a top portion 130 covering a space of the first main portion 120 which is not covered by the front portion, and a base portion 140 disposed inside the first main portion 120 to face the top portion 130.

In this case, the strip S may be an apparatus or device which collects a clinical specimen collectable from an individual, the strip S may include a collection part S1 which comes into contact with the clinical specimen first and a channel part S2 which is coupled to the collection part S1, in which a plurality of plates each having a plurality of channels formed therein are disposed, and which serves to disperse the clinical specimen. When the strip S is mounted in the in vitro diagnostics device 1, the collection part S1 may be disposed outside the housing 100, and the channel part S2 may be disposed in the inner space which is the inside of the housing 100.

The opening and closing unit 200 may be disposed in the front portion. The opening and closing unit 200 may be rotatably coupled to the front portion. The opening and closing unit 200 may close the entrance 111 of the housing 100 to prevent foreign matter from being introduced into the housing 100 when the in vitro diagnostics device 1 is not used. The opening and closing unit 200 may include a main opening and closing part 210 and a sub-opening and closing part 220.

An upper part 211 and a lower part 212 may be coupled to form the main opening and closing part 210. The upper part 211 and lower part 212 may be coupled to form the main opening and closing part 210 having a hollow structure. The main opening and closing part 210 may be rotatably coupled to the front portion 110 of the housing 100. A hole which may movably accommodate the sub-opening and closing part 220 may be formed in the lower part 212 of the main opening and closing part 210.

A magnetic body with magnetism may be disposed in the main opening and closing part 210. Accordingly, when the main opening and closing part rotates toward the top portion 130 of the housing 100, the main opening and closing part 210 may be fixed to the front portion 110 of the housing 100 by the magnetic body. In addition, an elastic body may be disposed in the main opening and closing part 210. The elastic body may elastically support the sub-opening and closing part 220. The elastic body may be provided as a plurality of elastic bodies. One end of the elastic body may be supported by the upper part of the main opening and closing part 210, and the other end thereof may be supported by the sub-opening and closing part 220.

The sub-opening and closing part 220 may be movably disposed in the main opening and closing part 210. More specifically, the sub-opening and closing part 220 may be movably accommodated in the hole formed in the lower part of the main opening and closing part 220. The sub-opening and closing part 220 may be elastically supported by the elastic body disposed in the main opening and closing part 210.

When the strip S does not enter the entrance 111 formed in the front portion 110 of the housing 100 in a state in which the main opening and closing part 210 has rotated toward the base portion 140 of the housing 100, the sub-opening and closing part 220 may close the entrance 111 to prevent foreign matter such as dust from being introduced into an inner portion of the entrance 111.

In addition, when the strip S has entered the entrance 111 formed in the front portion 110 of the housing 100 in a state in which the main opening and closing part 210 has rotated toward the base portion 140 of the housing 100, the main opening and closing part 210 may be supported by the collection part S1 of the strip S. Accordingly, when the strip S has entered the entrance 111, the sub-opening and closing part 220 closes a gap formed between the entrance 111 and the collection part S1 of the strip S. Accordingly, a phenomenon in which foreign matter such as dust is introduced into the gap formed between the collection part S1 of the strip S and the entrance 111 can be prevented to improve test reliability. In addition, since light which may be introduced through the gap formed between the entrance 111 and the collection part S1 of the strip S can be blocked, test accuracy can be maintained.

Referring to FIGS. 1 to 6, the fixing block 300 may be disposed in the housing 100. More specifically, in the housing 100, the fixing block 300 may be disposed at a location close to the entrance 111 formed in the front portion of the housing 100. The fixing block 300 may be a component to which the strip guide cover 500 is fixed, and the fixing block 300 may be coupled to and supported by the base portion 140 of the housing 100 as illustrated in FIG. 2. The fixing block 300 may include a second main portion 310 and a side portion 320.

The second main portion 310 may be a portion facing the channel part S2 of the strip S mounted in the in vitro diagnostics device 1. The second main portion 310 may include a first mounting portion on which the collection part S1 of the strip S is mounted and a second mounting portion in which a groove, in which the first substrate 400 is disposed, is formed. A level of the second mounting portion may be equal to a level of a substrate main body 411 of the first substrate 400 which will be described below. Accordingly, when the first substrate 400 is mounted on the second mounting portion, an exposed surface of the second mounting portion and an exposed surface of the substrate main body 411 of the first substrate 400 may be colinear with each other, and thus a phenomenon in which the channel part S2 of the strip S is tilted due to the first substrate 400 when the channel part S2 of the strip S is disposed on the first substrate 400 can be prevented.

The side portion 320 may be disposed on each of both side portions of the second main portion 310. The side portion 320 may support the second main portion 310. The side portion 320 may support a second gear part 624 of the optical module 600 which will be described below. The second mounting portion of the second main portion 310 may be disposed on the side portion 320 in a direction from the first main portion 120 of the housing 100 toward the top portion 130. A shaft of a support module 622 of the optical module 600, which will be described below, and a block supporting the shaft may be disposed in a space formed by the second mounting portion of the second main portion 310 and the side portion 320.

In addition, the side portion 320 may protrude toward the inner space of the housing 100 further than the second mounting portion of the second main portion 310. Accordingly, a portion of a moving unit 620 of the optical module 600 may be disposed in the space formed thereby.

The first substrate 400 may be disposed on the second mounting portion of the second main portion 310 of the fixing block 300. The first substrate 400 may generate heat such that the channel part S2 of the strip S maintains a predetermined temperature. The first substrate 400 may include the substrate main body 411, a temperature sensor 412, and a first through hole 413.

The substrate main body 411 may be disposed in the groove formed in the second mounting portion of the second main portion 310 of the fixing block 300. The substrate main body 411 may cover one side of an arrangement space DS, which will be described below, formed by the strip guide cover 500. The substrate main body 411 may be formed of an aluminum material but is not limited thereto. Various modules such as a circuit pattern and a resistor for generating heat may be disposed on the substrate main body 411. The substrate main body 411 may receive a measurement value from the temperature sensor 412 and determine whether the substrate main body 411 maintains a preset temperature.

The temperature sensor 412 may be disposed on the substrate main body 411. The temperature sensor 412 may measure a temperature of the substrate main body 411 and transmit a measurement value to the substrate main body 411. The temperature sensor 412 provided as a plurality of the temperature sensors 412 may be disposed on the substrate main body 411, and the plurality of temperature sensors 412 may be disposed to be spaced apart from each other.

The first through hole 413 may be disposed in the substrate main body 411. The first through hole 413 may be disposed between the plurality of temperature sensors 412 disposed to be spaced apart from each other. The first through hole 413 provided as a plurality of first through holes 413 may be formed in the substrate main body 411. The plurality of first through holes 413 may be disposed in a direction in which the strip S is mounted in the in vitro diagnostics device 1. The first through hole 413 may have a circular shape but is not limited thereto. The first through hole 413 may allow light emitted from the optical module 600 to pass therethrough.

Referring to FIGS. 2 to 10B, the strip guide cover 500 may be disposed in the in vitro diagnostics device 1. More specifically, the strip guide cover 500 may be disposed in the inner space of the housing 100. The strip guide cover 500 may guide the strip S which enters the inner space of the housing 100 through the entrance 111 of the housing 100 and fix the strip S. The strip guide cover 500 may include a main body 510, a guide 520, a pressing portion 530, a tension maintaining portion 540, a stopper 550, and a coupling portion 560.

As illustrated in FIGS. 1, 7, and 8, the main body 510 may cover an upper side of the strip S disposed in the inner space of the housing 100 in the direction from the first main portion 120 toward the top portion 130 of the housing 100. The main body 510 may be formed in a structure stepped from the coupling portion 560. More specifically, when the coupling portion 560 is coupled to the fixing block 300, the main body 510 may be disposed to be spaced apart from the strip S. The main body 510 may include an arrangement hole 511 and a second through hole 512.

The arrangement hole 511 may be disposed in the main body 510 in the direction in which the strip S is mounted in the in vitro diagnostics device 1. The arrangement hole 511 provided as a plurality of arrangement holes 511 may be disposed, and the plurality of arrangement holes 511 may be disposed to be spaced apart from each other in a direction intersecting the direction in the direction in which the strip S is mounted in the in vitro diagnostics device 1. The arrangement hole 511 may have a rectangular shape. The arrangement hole 511 may be a portion in which a tension portion 531 is disposed and may have a greater width than the tension portion 531. In this case, the width may be a length in a direction in which the plurality of arrangement holes 511 are disposed to be spaced apart from each other.

The second through hole 512 may be disposed in the main body 510. The second through hole 512 may be disposed between the plurality of arrangement holes 511 disposed to be spaced apart from each other. The second through hole 512 provided as a plurality of second through holes 512 may be formed in the main body 510. The plurality of second through holes 512 may be disposed in the direction in which the strip S is mounted in the in vitro diagnostics device 1. The second through hole 512 may have a circular shape but is not limited thereto. The second through hole 512 may allow light, which is emitted from the optical module 600 and passes through the first through hole 413 of the first substrate 400 and the channel part S2 of the strip S, to pass. A distance between the second through holes 512 may be equal to a distance between the first through holes 413.

The guide 520 may be disposed on a surface facing the channel part S2 of the strip S when the strip S is mounted in the in vitro diagnostics device 1. The guide 520 may protrude from the main body 510. As illustrated in FIG. 5, the guide 520 may be disposed in the direction in which the strip S is mounted in the in vitro diagnostics device 1. The guide 520 may be disposed outside the arrangement hole 511 in a direction intersecting the direction in which the strip S is mounted in the in vitro diagnostics device 1. The guide 520 may have a greater length than the arrangement hole 511 but is not limited thereto.

As illustrated in FIGS. 8 and 10A, the guide 520 and the main body 510 may form the arrangement space DS in which the strip S is disposed. The guide 520 may guide the strip S which enters the arrangement space DS. The guide 520 may include a first surface 521 and a second surface 522.

The first surface 521 and the second surface 522 may be surfaces facing both side portions of the channel part S2 of the strip S which enters the arrangement space DS. The first surface 521 and the second surface 522 may be disposed in the direction in which the strip S is mounted in the in vitro diagnostics device 1.

As illustrated in FIG. 8, a first distance D1 from the first surface 521 to the second surface 522 may be greater than or equal to a second distance D2 from one side portion of the strip S (one side portion of the channel part S2) to the other side portion of the strip S (the other side portion of the channel part S2). Accordingly, shaking of the channel part S2 of the strip S disposed inside the guide 520 can be prevented to improve the test stability of the in vitro diagnostics device 1 and secure the test reliability thereof.

The pressing portion 530 may be disposed inside the guide 520 and disposed in the arrangement space DS. More specifically, the pressing portion 530 may be disposed in the arrangement hole 511. The pressing portion 530 may press the channel part S2 of the strip S disposed in the arrangement space DS formed by the main body 510 and the guide 520. The pressing portion 530 may include the tension portion 531 and a protrusion 532.

As illustrated in FIG. 9, the tension portion 531 may be a portion supporting the protrusion 532 and may have a smaller width than the arrangement hole 511. The tension portion 531 may include first tension portions 531a and a second tension portion 531b.

The first tension portions 531a may be disposed to be inclined downward from both end portions of the arrangement hole 511 toward the protrusion 532. The second tension portion 531b may connect the first tension portions 531a disposed at both end portions of the arrangement hole 511. The second tension portion 531b may further protrude from the arrangement hole 511 toward the first substrate 400 but is not limited thereto. The protrusion 532 may be disposed on the second tension portion 531b. Such a shape of the tension portion 531 may allow the protrusion 532 to easily come into contact with the channel part S2 of the strip S when the strip S enters the arrangement space DS. Accordingly, the necessity of increasing a length of the protrusion 532 to bring the protrusion 532 into contact with the channel part S2 of the strip S can be reduced. Accordingly, when the channel part S2 of the strip S comes into contact with the protrusion 532, a possibility of the protrusion 532 being broken by a force generated when the strip S comes into contact with the protrusion 532 can be reduced.

The protrusion 532 may be disposed on the second tension portion 531b. The protrusion 532 may have a half circular or half elliptical shape but is not limited thereto. The protrusion 532 may come into contact with the strip S.

A third distance D3 from a surface of the second tension portion 531b on which the protrusion 532 is disposed to an end portion of the protrusion 532 may be greater than a fourth distance D4 from the surface of the second tension portion 531b on which the protrusion 532 is disposed to a surface of the strip S which is disposed in the arrangement space DS and faces the second tension portion 531b. That is, as illustrated in FIG. 10A, since the protrusion 532 is disposed at a location overlapping the channel part S2 of the strip S in the inner space formed by the main body 510 and the guide 520, when the channel part S2 of the strip S enters the inner space, the protrusion 532 may press the channel part S2 of the strip S. The channel part S2 of the strip S pressed by the protrusion 532 may be in close contact with the substrate main body 411 of the first substrate 400. Accordingly, shaking of the channel part S2 of the strip S can be reduced to improve test reliability. In addition, heat generated by the substrate main body 411 of the first substrate 400 may be stably transmitted to the channel part S2 of the strip S, and thus a temperature of the channel part S2 of the strip S may be kept constant.

As illustrated in FIGS. 9 and 10A, the protrusion 532 may be provided as a plurality of protrusions 532 disposed to be spaced apart from each other in a direction in which the channel part S2 of the strip S enters the arrangement space DS. This is to reduce a possibility of another portion of the channel part S2 of the strip S in contact with the protrusion 532 being delaminated in the arrangement space DS when there is only one protrusion 532. That is, the plurality of protrusions 532 may uniformly press an entire region of the channel part S2 of the strip S toward the first substrate 400 so that the channel part S2 of the strip S may be stably in close contact with the first substrate 400 to improve the stability of the channel part S2 of the strip S and the test reliability of the in vitro diagnostics device 1.

The protrusion 532 may come into contact with and press the channel part S2 of the strip S which enters the inner space formed by the main body 510 and the guide 520. In this case, as illustrated in 10B, the protrusion 532 may be pushed in one direction by the channel part S2 of the strip S. Accordingly, the protrusion 532 may allow the channel part S2 of the strip S to be in close contact with the first substrate 400 without stopping the channel part S2 of the strip S which enters the inner space.

The tension maintaining portion 540 may be disposed in the arrangement hole 511 in a direction in which the second tension portion 531b is disposed. More specifically, the tension maintaining portion 540 may be disposed on a surface of the second tension portion 531b on which the protrusion 532 is not disposed. As illustrated in FIG. 9, the tension maintaining portion 540 provided as a plurality of tension maintaining portions 540 may be disposed in the arrangement hole 511.

The tension maintaining portion 540 may support the second tension portion 531b. More specifically, the tension maintaining portion 540 may support the second tension portion 531b to prevent a phenomenon in which the second tension portion 531b sags toward the substrate main body 411 of the first substrate 400 when the strip guide cover 500 is coupled to the fixing block 300.

The stopper 550 may protrude from one region of the main body 510. The stopper 550 may be disposed between coupling portions 560. The stopper 550 may come into contact with the collection part S1 of the strip S to stop movement of the strip S which enters the arrangement space DS. Accordingly, the collection part S1 of the strip S may be disposed outside the housing 100, and the channel part S2 of the strip S may be disposed in the housing 100.

The coupling portions 560 may be disposed in a region of the main body 510 in which the stopper 550 is disposed. The coupling portions 560 may be disposed on both side portions of the stopper 550. The coupling portions 560 may be coupled to the fixing block 300. The coupling portions 560 may be coupled to the fixing block 300 to fix the strip guide cover 500 to the fixing block 300. Each of the coupling portions 560 may have a stairway shape having a step. When the coupling portions 560 are coupled to the fixing block 300, the main body 510 may be disposed to be spaced apart from the second mounting portion of the fixing block 300 or the substrate main body 411 of the first substrate 400 mounted on the second mounting portion.

As described above, the strip guide cover 500 may guide the channel part S2 of the strip S and also allow the channel part S2 of the strip S to be in close contact with the substrate main body 411 of the first substrate 400 using the protrusion 532 to prevent shaking of the channel part S2 of the strip S disposed on the first substrate 400. Accordingly, the test accuracy and test reliability of the in vitro diagnostics device 1 can be improved due to the strip guide cover 500.

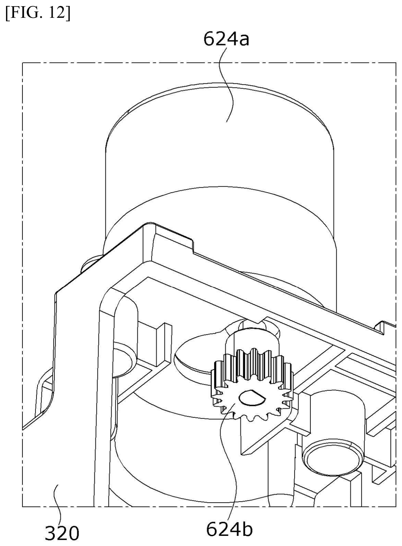

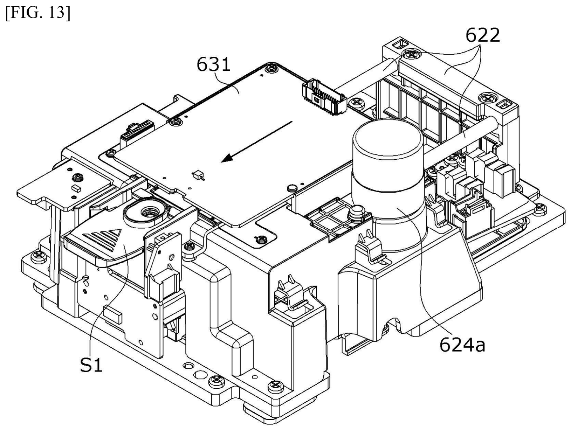

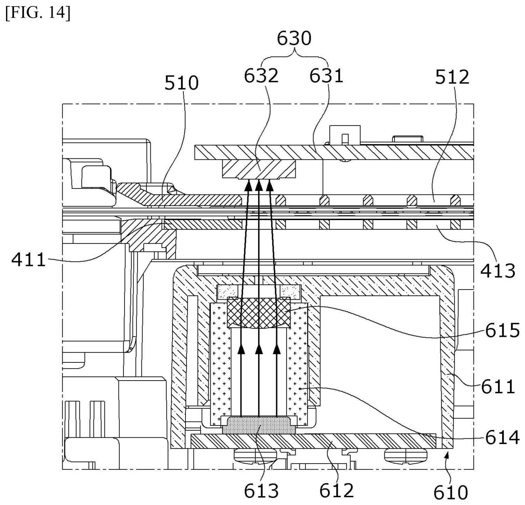

FIG. 11 is a view illustrating the fixing block, the strip guide cover, and the optical module, and FIG. 12 is a view illustrating the second gear part coupled to the fixing block. FIG. 13 is a view illustrating a state in which a moving block of the moving unit is moved, and FIG. 14 is a view illustrating a path through which light arrives at a light-receiving part from a light source.

Referring to FIGS. 2 and 11 to 14, the optical module 600 may be movably disposed in the housing 100. The optical module 600 may emit light toward the strip S. The optical module 600 may include a light-emitting unit 610, the moving unit 620, and a light-receiving unit 630.

As illustrated in FIG. 14, the light-emitting unit 610 may be formed to emit light toward the strip S. The light-emitting unit 610 may be coupled to the moving unit 620 and moved in the inner space of the housing 100 along with the moving unit 620. The light-emitting unit 610 may include a case 611, a second substrate 612, a light source 613, a holder 614, and a lens 615.

The case 611 may be coupled to a moving block 621 of the moving unit 620 which will be described below. The case 611 may have a hollow shape to accommodate the second substrate 612, the light source 613, the holder 614, and the lens 615. The case 611 may have a shape of which a region facing the substrate main body 411 of the first substrate 400 is open such that light emitted from the light source 613 moves to the outside.

In FIG. 11, the second substrate 612 may be disposed on a lower side of the case 611. The second substrate 612 may be a printed circuit board. The second substrate 612 may support the light source 613. The second substrate 612 may transmit an instruction signal for generating light to the light source 613.

In FIG. 14, the light source 613 may be disposed on the second substrate 612. The light source 613 may receive a control signal generated by the second substrate 612 and generate light. The light source 613 may include a light-emitting diode (LED), etc. The light emitted by the light source 613 may pass through the lens 615, and then arrive at a light-receiving part 632 of the light-receiving unit 630 through the first through hole 413 of the first substrate 400, the channel part S2 of the strip S, and the second through hole 512 of the main body 510 of the strip guide cover 500.

The holder 614 may have a shape surrounding a side portion of the light source 613. The holder 614 may have the cylindrical shape but is not limited thereto. The holder 614 may support the lens 615. The holder 614 may guide the light emitted from the light source 613.

The lens 615 may be disposed in an upper portion of the holder 614. The lens 615 may refract the light emitted from the light source 613 to collect the light on the light-receiving unit 630. The lens 615 may include a convex lens formed in a convex shape in a direction from the light source 613 toward the light-receiving unit 630.

The moving unit 620 may be coupled to the light-receiving unit 630. The moving unit 620 may move the light-receiving unit 630. The moving unit 620 may include the moving block 621, the support module 622, a first gear part 623, and a second gear part 624.

The moving block 621 may be formed in a shape having a quadrangular edge. The moving block 621 may include a hook. The moving block 621 may have a shape surrounding a third substrate 631 of the light-receiving unit 630. The hook may have a shape surrounding the shaft of the support module 622 such that the moving block 621 may move along the shaft of the support module 622.

As illustrated in FIGS. 11 and 13, the support module 622 may include the block and two shafts. Two shafts may be fixed by the block to provide a path through which the moving block 621 may move.

The first gear part 623 may be disposed on a side portion of the moving block 621. The first gear part 623 may be a rack gear, and the first gear part 623 may have a shape of which one surface of a rectangular-shaped plate has a concave and convex pattern. The first gear part 623 may be disposed in a longitudinal direction of the moving block 621.

The second gear part 624 may be fixedly disposed on the fixing block 300. More specifically, as illustrated in FIGS. 8 and 9. The second gear part 624 may be disposed on the side portion 320 of the fixing block 300. The second gear part 624 may include a power part 624a, which is coupled to the side portion 320 of the fixing block 300 and generates power, and a pinion part 624b coupled to the power part 624a and rotated in place by the power generated by the power part 624a. The pinion part 624b may be engaged with the first gear part 623. When the pinion part 624b rotates, the first gear part 623 may be moved to move the moving block 621.

The light-receiving unit 630 may be coupled to the moving unit 620. The light-receiving unit 630 may move along the moving unit 620. The light-receiving unit 630 may include the third substrate 631 and the light-receiving part 632.

The third substrate 631 may be coupled to the moving block 621. The third substrate 631 may collect a signal measured by the light-receiving part 632. The third substrate 631 may be a printed circuit board.

The light-receiving part 632 may be coupled to the third substrate 631. More specifically, the light-receiving part 632 may be disposed on a surface of the third substrate 631 facing the main body 510 of the strip guide cover 500. The light-receiving part 632 may be provided as a plurality of light-receiving parts 632, and the plurality of light-receiving parts 632 may be disposed to be spaced apart from each other. The light-receiving part 632 may collect the light emitted from the light source 613 of the light-emitting unit 610. The light-receiving part 632 may include a light-receiving sensor, etc.

The optical module 600 may emit light to the clinical specimen collected using the strip S and determine a state of the clinical specimen collected on the channel part S2 of the strip S.

While the present invention has been described above with reference to exemplary embodiments, it may be understood by those skilled in the art that various modifications and changes of the present invention may be made within a range not departing from the spirit and scope of the present invention defined by the appended claims. In addition, it should be interpreted that differences related to modifications and changes fall within the scope of the present invention defined by the appended claims.

**[Reference Numerals]**

| | | | |
|---|---|---|---|
| 1: | IN VITRO DIAGNOSTICS DEVICE | 100: | HOUSING |
| 110: | FRONT PORTION | 111: | ENTRANCE |
| 120: | FIRST MAIN PORTION | 130: | TOP PORTION |
| 140: | BASE PORTION | 200: | OPENING AND CLOSING UNIT |
| 210: | MAIN OPENING AND CLOSING PART | 211: | UPPER PART |
| 212: | LOWER PART | 220: | SUB-OPENING AND CLOSING PART |
| 300: | FIXING BLOCK | 310: | SECOND MAIN PORTION |
| 320: | SIDE PORTION | 400: | FIRST SUBSTRATE |
| 411: | SUBSTRATE MAIN BODY | 412: | TEMPERATURE SENSOR |
| 413: | FIRST THROUGH HOLE | 500: | STRIP GUIDE COVER |
| 510: | MAIN BODY | 511: | ARRANGEMENT HOLE |
| 512: | SECOND THROUGH HOLE | 520: | GUIDE |
| 521: | FIRST SURFACE | 522: | SECOND SURFACE |
| 530: | PRESSING PORTION | 531: | TENSION PORTION |
| 531A: | FIRST TENSION PORTION | 531B: | SECOND TENSION PORTION |
| 532: | PROTRUSION | 540: | TENSION MAINTAINING PORTION |
| 550: | STOPPER | 560: | COUPLING PORTION |
| 600: | OPTICAL MODULE | 610: | LIGHT-EMITTING UNIT |
| 611: | CASE | 612: | SECOND SUBSTRATE |
| 613: | LIGHT SOURCE | 614: | HOLDER |
| 615: | LENS | 620: | MOVING UNIT |
| 621: | MOVING BLOCK | 622: | SUPPORT MODULE |
| 623: | FIRST GEAR PART | 624: | SECOND GEAR PART |
| 624A: | POWER PART | 624 B: | PINION PART |
| 630: | LIGHT-RECEIVING UNIT | 631: | THIRD SUBSTRATE |
| 632: | LIGHT-RECEIVING PART | DS: | ARRANGEMENT SPACE |
| D1: | FIRST DISTANCE | D2: | SECOND DISTANCE |
| D3: | THIRD DISTANCE | D4: | FOURTH DISTANCE |
| S: | STRIP | S1: | COLLECTION PART |
| S2: | CHANNEL PART | | |

## Claims

1. A strip guide cover which is disposed in an in vitro diagnostics device and fixes a strip mounted in the in vitro diagnostics device, the strip guide cover comprising:
a main body covering an upper side of the strip and disposed to be spaced apart from the strip;
a guide which protrudes from the main body, forms an arrangement space, in which the strip is disposed, with the main body, and guides the strip which enters the arrangement space; and
a pressing portion which is disposed inside the guide and presses the strip disposed in the arrangement space.

2. The strip guide cover of claim 1, wherein:
the pressing portion includes a protrusion which comes into contact with the strip; and
the protrusion is provided as a plurality of protrusions disposed to be spaced apart from each other in a direction in which the strip enters the arrangement space.

3. The strip guide cover of claim 2, wherein:
the pressing portion includes a tension portion supporting the protrusion; and
an arrangement hole in which the tension portion is disposed is formed in the main body.

4. The strip guide cover of claim 3, wherein the tension portion includes:
first tension portions disposed to be inclined downward from two end portions of the arrangement hole toward the protrusion; and
a second tension portion which connects the first tension portions disposed on the two end portions of the arrangement hole and on which the protrusion is disposed.

5. The strip guide cover of claim 1, wherein:
the guide includes a first surface and a second surface which face a side portion of the strip which enters the arrangement space; and
a first distance from the first surface to the second surface is greater than or equal to a second distance from one side portion of the strip to the other side portion of the strip.

6. The strip guide cover of claim 4, wherein a third distance from a surface of the second tension portion on which the protrusion is disposed to an end portion of the protrusion is greater than a fourth distance from the surface of the second tension portion on which the protrusion is disposed to a surface of the strip which is disposed in the arrangement space and faces the second tension portion.

7. The strip guide cover of claim 4, further comprising a tension maintaining portion disposed in the arrangement hole in a direction in which the second tension portion is disposed, disposed on a surface of the second tension portion on which the protrusion is not disposed, and supporting the second tension portion.

8. The strip guide cover of claim 4, further comprising a stopper which protrudes from one region of the main body and stops movement of the strip which enters the arrangement space.

9. An in vitro diagnostics device comprising:
a housing in which an entrance, through which a strip for in vitro diagnostics is accommodated, and an inner space connected to the entrance are provided; and
a strip guide cover which guides the strip which enters the inner space of the housing through the entrance,
wherein the strip guide cover includes a main body covering an upper side of the strip and disposed to be spaced apart from the strip, a guide which protrudes from the main body, forms an arrangement space, in which the strip is disposed, with the main body, and guides the strip which enters the arrangement space, and a pressing portion which is disposed inside the guide and presses the strip disposed in the arrangement space.

10. The in vitro diagnostics device of claim 9, wherein:
the pressing portion includes a protrusion which comes into contact with the strip; and
the protrusion is provided as a plurality of protrusions disposed to be spaced apart from each other in a direction in which the strip enters the arrangement space.

11. The in vitro diagnostics device of claim 10, wherein:
the pressing portion includes a tension portion supporting the protrusion; and
an arrangement hole in which the tension portion is disposed is formed in the main body.

12. The in vitro diagnostics device of claim 11, wherein the tension portion includes:
first tension portions disposed to be inclined downward from two end portions of the arrangement hole toward the protrusion; and
a second tension portion which connects the first tension portions disposed on the two end portions of the arrangement hole and on which the protrusion is disposed.

13. The in vitro diagnostics device of claim 9, wherein:
the guide includes a first surface and a second surface which face a side portion of the strip which enters the arrangement space; and
a first distance from the first surface to the second surface is greater than or equal to a second distance from one side portion of the strip to the other side portion of the strip.

14. The in vitro diagnostics device of claim 12, wherein a third distance from a surface of the second tension portion on which the protrusion is disposed to an end portion of the protrusion is greater than a fourth distance from the surface of the second tension portion on which the protrusion is disposed to a surface of the strip which is disposed in the arrangement space and faces the second tension portion.

15. The in vitro diagnostics device of claim 9, further comprising:
a fixing block which is disposed in the housing and to which the strip guide cover is fixed; and
an optical module which is movably disposed in the housing and emits light toward the strip.
